(19) **Europäisches Patentamt**

**European Patent Office**

**Office européen des brevets**

(11) **EP 1 544 700 A2**

(12) **EUROPÄISCHE PATENTANMELDUNG**

(43) Veröffentlichungstag:
**22.06.2005  Patentblatt 2005/25**

(51) Int Cl.⁷: **G05B 19/41**

(21) Anmeldenummer: **04027255.1**

(22) Anmeldetag: **17.11.2004**

(84) Benannte Vertragsstaaten:
**AT BE BG CH CY CZ DE DK EE ES FI FR GB GR HU IE IS IT LI LU MC NL PL PT RO SE SI SK TR**
Benannte Erstreckungsstaaten:
**AL HR LT LV MK YU**

(71) Anmelder: **Bosch Rexroth AG**
**70184 Stuttgart (DE)**

(72) Erfinder: **Bader, Bertold**
**64711 Erbach (DE)**

(30) Priorität: **20.12.2003  DE 10360227**

(54) **Verfahren zur Steuerung der Orientierung eines Werkzeugs an einer Werkzeugmaschine sowie eine Werkzeugmaschine zur Steuerung der Orientierung eines Werkzeugs**

(57)    Die Erfindung betrifft ein Verfahren zur Steuerung der Orientierung eines Werkzeugs an einer Werkzeugmaschine mit einer Rundachse, um das Werkzeug in einer Ebene um eine Rotationsachse zu rotieren, wobei die Werkzeugmaschine so gesteuert wird, um das Werkzeug gemäß eines Bewegungsstreckensatzes zu bewegen, wobei der Bewegungsstreckensatz zu einem modifizierten Bewegungsstreckensatz geändert wird, dass die Bewegung gemäß dem modifizierten Bewegungsstreckensatzes durch die Rotationsachse führt, wenn die durch den Bewegungsstreckensatz definierte Bewegungsstrecke durch einen vorbestimmten Bereich um die Rotationsachse führt und eine große Rotation des Werkzeuges um die Rotationsachse bewirkt, wobei der modifizierte Bewegungsstreckensatz einen ersten Teil-Streckensatz, der eine erste Bewegung von einem Anfangspunkt bis zur Rotationsachse beschreibt, und einen zweiten Teil-Streckensatz aufweist, der eine Bewegung von der Rotationsachse zu einem Endpunkt beschreibt, wobei der Anfangspunkt und der Endpunkt auf der durch den Bewegungsstreckensatz definierten Bewegungsstrecke liegen.

FIG.9

EP 1 544 700 A2

**Beschreibung**

Die Erfindung betrifft ein Verfahren zur Steuerung der Orientierung eines Werkzeugs an einer Werkzeugmaschine, insbesondere an einer Fünfachswerkzeugmaschine mit drei Linearund zwei Rundachsen. Weiterhin betrifft die Erfindung eine Werkzeugmaschine zur Steuerung der Orientierung eines Werkzeugs.

Die Orientierung eines rotationssymmetrischen Werkzeugs, z. B. eines Fräsers, an einer Werkzeugmaschine, insbesondere an einer Werkzeugmaschine, an der das Werkzeug über zwei Rundachsen positionierbar ist, z. B. an einer Fünfachswerkzeugmaschine mit drei Linear- und zwei Rundachsen, wird im Allgemeinen durch einen Orientierungsvektor $\vec{\rho}$ beschrieben. $\vec{\rho}$ ist ein Einheitsvektor entlang der Symmetrieachse des Werkzeugs und zeigt von der Werkzeugspitze in Richtung der Werkzeugaufnahme an der Werkzeugmaschine. Die Fünfachs-Rückwärtstransformation der numerischen Steuerung rechnet den Vektor in Achspositionswerte um.

Die Orientierungsbewegung des Werkzeugs, d. h. die Bewegung von einer Orientierung zu einer nächsten, erfolgt im Allgemeinen durch eine Großkreisbewegung der Vektorspitze auf der Einheitskugel. Dabei ergibt sich eine gleichmäßige Drehgeschwindigkeit, wenn man von gegebenenfalls notwendigen Beschleunigungs- und Abbremsvorgängen an den jeweiligen Satzübergängen absieht.

Der XY-Anteil der Drehbewegung wird durch eine der Rundachsen, C-Achse genannt, bewerkstelligt, die um die Z-Koordinate dreht. Bei vorgegebener konstanter Winkelgeschwindigkeit des Orientierungsvektors wird die Achsgeschwindigkeit der Rundachse umso höher, je näher $\vec{\rho}$ an der Polstelle $\vec{\rho}$ = (0,0,1) vorbeidreht. Entfernt von der Polstelle ergeben sich kleine und in Polnähe große Winkeländerungen der Rundachse pro Zeiteinheit. Da die Rundachse nur.eine maximale Drehgeschwindigkeit aufweist, begrenzt sie damit für ein gegebenes Bahnsegment die maximal mögliche Bahngeschwindigkeit in Polnähe erheblich. Diese muss daher innerhalb der Bahnplanung soweit herabgesetzt werden, dass die maximal mögliche Achsgeschwindigkeit der Rundachse nicht überschritten wird. Dies kann zu einer extrem langsamen Kriechbewegung auf dem gesamten Bahnsegment führen.

Bei einem exakten Durchgang durch die Polstelle hingegen ergibt sich abhängig von der Achskinematik entweder überhaupt keine oder wie z. B. beim kardanischen Fräskopf eine konstante Geschwindigkeit der Rundachse. Die Begrenzung der Bahngeschwindigkeit fällt in diesem Fall um Größenordnungen weniger drastisch aus.

Aus diesem Grunde wird üblicherweise bei einem Verlauf des Orientierungsvektors nahe der Polstelle die Orientierüngsbewegung durch die Polstelle umgeleitet, wenn die Bewegung durch einen vorbestimmten Umgebungsbereich um die Polstelle führt. Dazu wird die Großkreisbewegung, die nahe der Polstelle verläuft, so verschoben, dass die Orientierungsbewegung ausgehend von ihrem Anfangsorientierungsvektor durch die Polstelle führt. Dabei ist jedoch nachteilig, dass der Endorientierungsvektor des verschobenen Großkreises mehr oder weniger stark von dem Endorientierungsvektor des ursprünglichen Großkreises abweicht. Die Abweichung kann dabei deutlich größer sein, als der vorbestimmte Umgebungsbereich um die Polstelle. Dies kann vor allem beim Umfangfräsen, d. h. bei einem kontinuierlichen Einsatz des Werkzeugs entlang eines Bahnsegments, zu einer Ungenauigkeit (Konturverletzung) auf dem bearbeiteten Werkstück führen.

Darüber hinaus ergeben sich nicht glatte Übergänge am Startund Endpunkt zum Vorgänger- bzw. Nachfolgerbewegungssegment. Dies hat den Nachteil, dass die Bewegung an den Übergangsstellen auf Null abgebremst werden muss, um Geschwindigkeitssprünge der an der Bewegung beteiligten Achsen der Werkzeugmaschine zu vermeiden.

Es ist Aufgabe der vorliegenden Erfindung, ein Verfahren zur Steuerung der Orientierung eines Werkzeugs an einer Werkzeugmaschine vorzusehen, bei dem die vorgegebenen Orientierungen des Werkzeugs am Start- und Endpunkt des durch die Polstelle verlaufenden Bewegungssegmentes eingehalten werden und wobei die maximale Abweichung der Orientierung des Werkzeugs nicht größer ist, als die minimale Abweichung der Orientierung bei einer Bewegung durch die Polstelle.

Diese Aufgabe wird durch das Verfahren nach Anspruch 1 sowie durch die Werkzeugmaschine nach Anspruch 8 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zur Steuerung der Orientierung eines Werkzeugs an einer Werkzeugmaschine vorgesehen. Die Werkzeugmaschine weist eine Rundachse auf, um das Werkzeug in einer Ebene.um eine Rotationsachse zu rotieren. Die Werkzeugmaschine wird so gesteuert, um das Werkzeug gemäß.eines Bewegungsstreckensatzes zu bewegen. Der Bewegungsstreckensatz wird zu einem modifizierten Bewegungsstreckensatz geändert, so dass die Bewegung gemäß dem modifizierten Bewegungsstreckensatzes durch die Rotationsachse führt, wenn die durch den Bewegungsstreckensatz definierte Bewegungsstrecke durch einen vorbestimmten Bereich um die Rotationsachse führt. Der modifizierte Bewegungsstreckensatz weist einen ersten Teil-Streckensatz auf, der eine erste Bewegung von einem Anfangspunkt bis zur Rotationsachse beschreibt und einen zweiten Teil-Streckensatz, der eine,Bewegung von der Rotationsachse zu einem Endpunkt beschreibt, wobei der Anfangspunkt und der Endpunkt auf der durch den ursprünglichen Bewegungsstreckensatz definierten Bewegungsstrekke liegen.

Das erfindungsgemäße Verfahren hat den Vorteil, dass bei einer Umleitung der Bewegung durch die Polstelle, d. h. durch die Rotationsachse der Rundachse nicht dazu führt, dass am Ende des umgeleiteten Bewegungssegmentes eine zu große Abweichung zwischen dem Endpunkt des umgeleiteten Bewegungsstreckensatzes und dem Endpunkt des ursprünglichen Bewegungsstreckensatzes besteht, was zu einer Ungenauigkeit auf dem zu bearbeitenden Werkstück führen kann. Gemäß dem erfindungsgemäßen Verfahren wird erreicht, dass Anfangs- und Endpunkt des ursprünglichen Bewegungsstreckensatzes und des modifizierten Bewegungsstreckensatzes identisch sind. Auf diese Weise kann weiterhin darauf verzichtet werden, eine Ausgleichsbewegung durchzuführen, um das Werkzeug von dem Endpunkt des auf herkömmliche Weise umgeleiteten Bewegungsstreckensatzes zu dem Endpunkt des ursprünglichen Bewegungsstreckensatzes durchzuführen.

Vorzugsweise erfolgt die durch den modifizierten Bewegungsstreckensatz beschriebene Bewegung gemäß einem Orientierungsvektor. Der Anfangspunkt wird durch einen Startorientierungsvektor und der Endpunkt durch einen Endorientierungsvektor dargestellt. Die Rotation wird durch eine Kreisbewegung um einen Drehachsenvektor um einen Winkel $\beta$ zwischen dem Startorientierungsvektor und dem Endorientierungsvektor dargestellt. Es erfolgt eine erste Bewegung bis zu einem Umkehrwinkel und eine zweite Bewegung von dem Umkehrwinkel ausgehend. Der Umkehrwinkel wird durch den Winkel zwischen Startorientierungsvektor und dem Orientierungsvektor bestimmt, an dem der Orientierungsvektor den minimalen Abstand zur Rotationsachse hat. Der Drehachsen vektor wird bei der ersten Bewegung gemäß dem ersten Teil-Streckensatz von einer Ausgangslage in Richtung der Ebene bewegt und bei der zweiten Bewegung gemäß dem zweiten Teil-Streckensatz in Richtung der Ausgangslage zurückbewegt.

Dadurch kann auf einfache Weise der Bewegungsstreckensatz durch die Rotationsachse gelegt werden, da dies immer der Fall ist, wenn der Drehachsenvektor auf der Rotationsebene liegt.

Gemäß einer ersten Ausführungsform wird der Drehachsenvektor gemäß des ersten und/oder des zweiten Teil-Streckensatzes linear bewegt. Auf diese Weise findet eine lineare Bewegung zwischen dem Anfangspunkt und der Rotationsachse und zwischen der Rotationsachse und dem Endpunkt statt.

Gemäß einer zweiten Ausführungsform beschreiben der erste und/oder der zweite Teil-Streckensatz eine Bewegung, die Bewegung, die tangentiale und krümmungsstetige Übergänge zu Vorgänger- und/oder Nachfolgerbewegung aufweisen. Insbesondere sind der erste und der zweite Teil-Streckensatz so angepasst, dass auch an der Rotationsachse ein tangentialer und krümmungsstetiger Übergang zwischen den Bewegungen gemäß dem ersten und dem zweiten Teil-Streckensatz gebildet wird. Dies kann insbesondere mit Hilfe einer Polynomfunktion durchgeführt werden, mit denen der erste und der zweite Teil-Streckensatz beschrieben wird. Insbesondere kann die Polynomfunktion eine Polynomfunktion vierten Grades sein.

Gemäß einem weiteren Aspekt der vorliegenden Erfindung ist eine Werkzeugmaschine zur Steuerung der Orientierung.eines Werkzeuges mit einer Rundachse vorgesehen, um das Werkzeug in einer Ebene um die Rotationsachse zu rotieren. Die Werkzeugmaschine weist eine Steuereinheit auf, um das Werkzeug gemäß eines Bewegungsstreckensatzes in der Ebene um die Rotationsachse zu bewegen, wobei die Steuereinheit weiterhin so gestaltet ist, um den Bewegungsstreckensatz zu einem modifizierten Bewegungsstreckensatz zu ändern, so dass die Bewegung gemäß dem modifizierten Bewegungsstreckensatzes durch.die Rotationsachse führt, wenn die durch den Bewegungsstreckensatz definierte Bewegungsstrecke durch einen vorbestimmten Bereich um die Rotationsachse führt. Der modifizierte Streckensatz weist einen ersten Teil-Streckensatz auf, der eine erste Bewegung von einem Anfangspunkt bis zur Rotationsachse beschreibt. Der modifizierte Streckensatz weist weiterhin einen zweiten Teil-Streckensatz auf, der eine Bewegung von der Rotationsachse zu einem Endpunkt beschreibt, wobei der Anfangs- und der Endpunkt auf der durch den Bewegungsstreckensat,z definierten Bewegungsstrecke liegen.

Die erfindungsgemäße Werkzeugmaschine hat den Vorteil, dass eine zu schnelle Bewegung der Rundachse aufgrund der Bewegung des Werkzeugs nahe der Polstelle durch die Rotationsachse der Rundachse vermieden werden kann, wobei die Begrenzung der Bewegungsgeschwindigkeit der Rundachse die Gesamtbewegung der Werkzeugmaschine verlangsamt. Durch das Führen der Bewegung durch die Rotationsachse kann eine Rotation des Werkzeuges ganz oder zum größten Teil vermieden werden, so dass eine Verlangsamung der Bewegung durch die maximale Bewegungsgeschwindigkeit der Rundachse nicht auftritt. Um zu vermeiden, dass der Endpunkt der umgeleiteten Bewegung zu stark von dem Endpunkt des ursprünglichen Bewegungsstreckensatzes abweicht, wird erfindungsgemäß vorgeschlagen, den Bewegungsstreckensatz in zwei Teil-Streckensätze umzuwandeln, wobei der erste Teil-Streckensatz eine Bewegung zwischen dem Anfangspunkt des ursprünglichen Bewegungsstreckensatzes und der Rotationsachse und der zweite Teil-Streckensatz eine Bewegung zwischen der Rotationsachse und dem Endpunkt des ursprünglichen Bewegungsstreckensatzes beschreibt. Dadurch wird erreicht, dass keine Ausgleichsbewegung bei einer Umleitung der Bewegung des Werkzeuges durch die Rotationsachse am Ende des umgeleiteten Bewegungsstreckensatzes erfolgen muss.

Bevorzugte Ausführungsformen der Erfindung werden im Folgenden anhand der beigefügten Zeichnungen näher erläutert. Es zeigen:

Figur 1 eine Veranschaulichung der Bewegung der Werkzeugorientierung;

Figur 2 eine Bewegung der XY-Projektion des Orientierungsvektors;

Figur 3 ein Umleiten der Orientierungsbewegung durch die Rotationsachse gemäß dem Stand der Technik;

Figur 4 ein Umleiten der Orientierungsbewegung durch die Rotationsachse, wenn der Anfangspunkt des Bewegüngstreckensatzes nahe der Rotationsachse liegt;

Figur 5 eine Veranschaulichung der Übergänge am Start- und Endpunkt bei einem modifizierten Bewegüngsstreckensatzes gemäß dem Stand der Technik;

Figur 6 eine Veranschaulichung der Vektorrotation einer Drehachse;

Figur 7 ein Umleiten der Orientierungsbewegung durch die Rotationsachse gemäß einer ersten Ausführungsform der Erfindung;

Figur 8 eine Veranschaulichung des Umleitens der Orientierungsbewegung durch die Rotationsachse gemäß einer weiteren Ausführungsform der Erfindung; und

Figur 9 eine Werkzeugmaschine gemäß einer Ausführungsform der Erfindung.

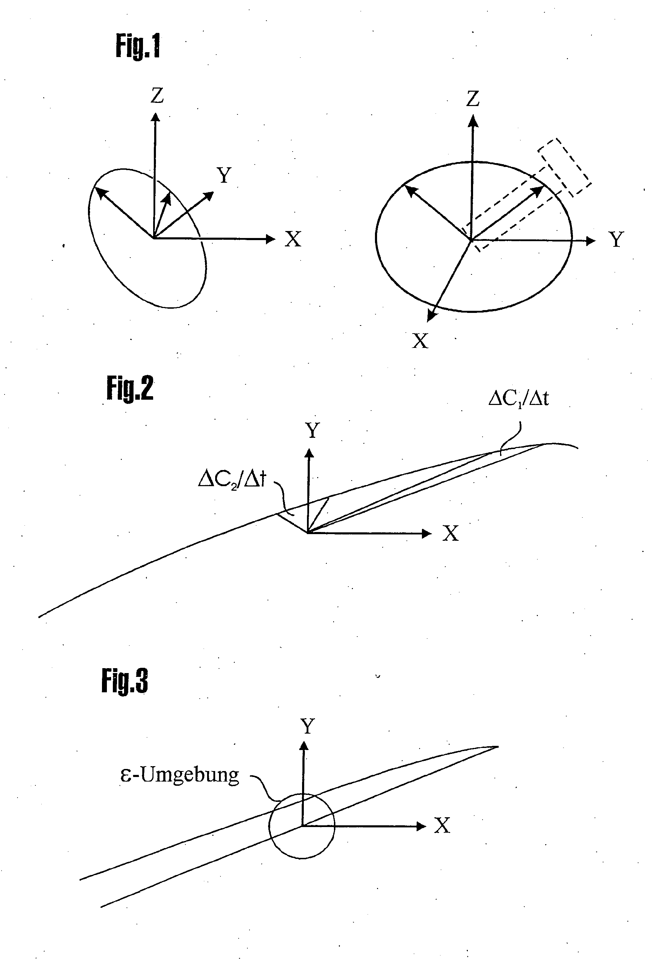

Die Bewegung der Werkzeugorieritierung an einer beispielhaften Fünfachswerkzeugmaschine mit z. B. drei Linear- und zwei Rundachsen wird durch einen Orientierungsvektor $\vec{\rho}$ beschrieben. $\vec{\rho}$ ist ein Einheitsvektor, der sich parallel zur Symmetrieachse des Werkzeugs erstreckt und von der Werkzeugsspitze in Richtung der Werkzeugaufnahme zeigt. Dies ist in der rechten Abbildung der Figur 1 dargestellt. Eine Steuereinheit der Werkzeugmaschine rechnet gemäß einer Fünfachs-Rückwärtstransformation den Orientierungsvektor $\vec{\rho}$ in Achspositionswerte um.

Die Orientierungsbewegung des Werkzeugs wird im Wesentlichen. durch die beiden Rundachsen der Werkzeugmaschine durchgeführt. Eine der Rundachsen ist verantwortlich für den XY-Anteil der Drehbewegung und rotiert um die Z-Koordinate. Bei konstanter Winkelgeschwindigkeit des Orientierungsvektors wird die Drehgeschwindigkeit umso höher, je näher der Orientierungsvektor $\vec{\rho}$ an der Polstelle $\vec{\rho} = (0,0,1)$, das entspricht der Rotationsachse, vorbeiläuft.

Ein Bewegungsstreckensatz entspricht einem Steckensatz, der eine Bewegung zwischen einem Anfangspunkt gemäß einem Startorientierungsvektor und einem Endpunkt gemäß einem Endorientierungsvektor beschreibt. Die Bewegungen der Werkzeugmaschine bzw. des Werkzeuges werden im Allgemeinen durch aufeinander folgende Bewegungsstreckensätze beschrieben, gemäß denen das Werkzeug nacheinander die darin vorgeschriebenen Bewegungen abfährt. Die Orientierung des Werkzeuges ist Teil des Bewegungsstreckensatzes, wobei die tatsächliche Orientierung des Werkzeugs gemäß zweier Rundachsen eingestellt wird.

In Figur 2 ist die Projektion der Spitze des Orientierungsvektors auf die XY-Ebene dargestellt. Die Polstelle entspricht der Projektion der Rotationsachse auf die XY-Ebene. Im dargestellten Beispiel verläuft die Orientierung des Werkzeugs nahe der Polstelle vorbei. Ist die Orientierung des Werkzeugs gemäß der Projektion des Großkreises auf die XY-Ebene weit von der Polstelle entfernt, ergeben sich kleine $\Delta C_1/\Delta t$; ist die Orientierung des Werkzeuges gemäß der Projektion des Großkreise auf die XY-Ebene in Polnähe, so ergeben sich große Winkelgeschwindigkeiten, $\Delta C_2/\Delta t$ der Rundachse, um die sich das Werkzeug drehen muss. Da die Rotationsgeschwindigkeit der betreffenden Rundachse begrenzt ist, wird damit für ein gegebenes Bahnsegment die maximal mögliche Bahngeschwindigkeit begrenzt. In Figur 2 sind die Achsgeschwindigkeiten in Polnähe und entfernt vom Pol dargestellt. Man erkennt, dass in Polnähe die Winkelgeschwindigkeit der betreffenden Rundachse größer ist als bei Orientierungen entfernt von der Polstelle.

Um dieses Problem zu vermeiden, werden üblicherweise Projektionen von Bahnsegmenten auf die XY-Ebene, die nahe einer Polstelle vorbeiführen, durch die Polstelle geleitet. Das führt dazu, dass keine Rotationsbewegung bzw. nur eine sehr geringe Rotationsbewegung der bestreffenden Rundachse durchgeführt werden muss. Das Umleiten der Bewegung erfolgt durch eine Transformation eines Bewegungsstreckensatzes, der die Örientierungsbewegung des Werkzeuges an der Werkzeugmaschine vorgibt. Der Bewegungsstreckensatz wird so verändert, dass die Bewegung des Werkzeuges durch die Polstelle erfolgt. Dies ist in Figur 3 dargestellt.

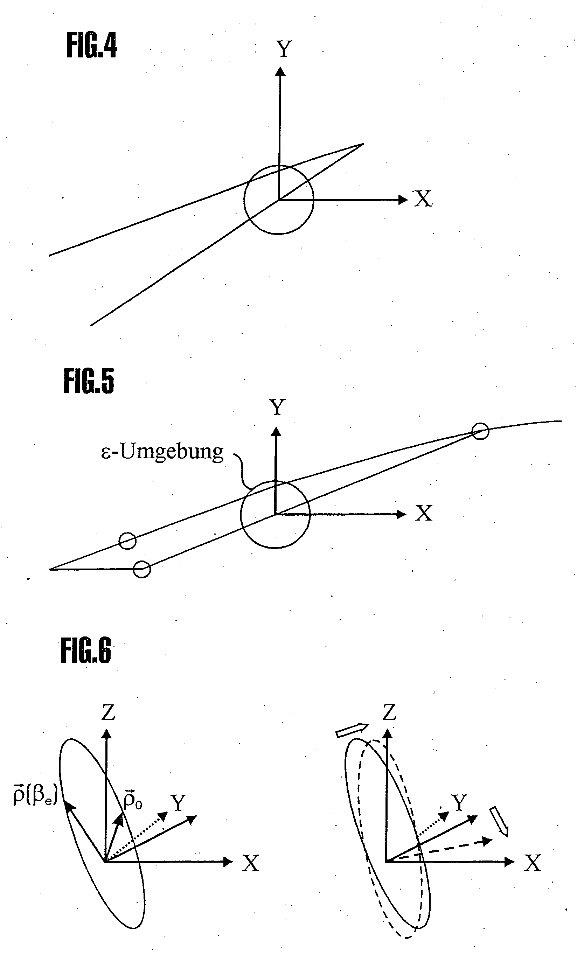

Insbesondere wenn der Anfangspunkt der betreffenden Bewegung gemäß dem Beweguhgsstreckensatz nahe an der Polstelle ist, und das Bahnsegment nicht zu nahe an der Polstelle vorbeiführt, kann dies dazu führen, dass die Endpunkte des ursprünglichen Bewegungsstreckensatzes und des umgeleiteten Bewegungsstreckensatzes erheblich voneinander abweichen. Dies ist in Abbildung 4 dargestellt.

Das Umleiten wird dann durchgeführt, wenn sich die ursprürigliche Bewegung zu nahe an der Polstelle vorbeiführt, so dass ohne Modifizierung des Bewegungsstreckensatzes eine zu schnelle Rotationsbewegung der entsprechenden Rundachse erforderlich wäre, d. h. eine Rotationsbewegung, die die maximale Rotationsgeschwindigkeit der Rundachse übersteigt. Ein solcher Bereich wird als $\in$-Umgebung um die Polstelle angegeben und ist im Wesentlichen ein kreisförmiger Bereich in der XY-Ebene um die Polstelle.

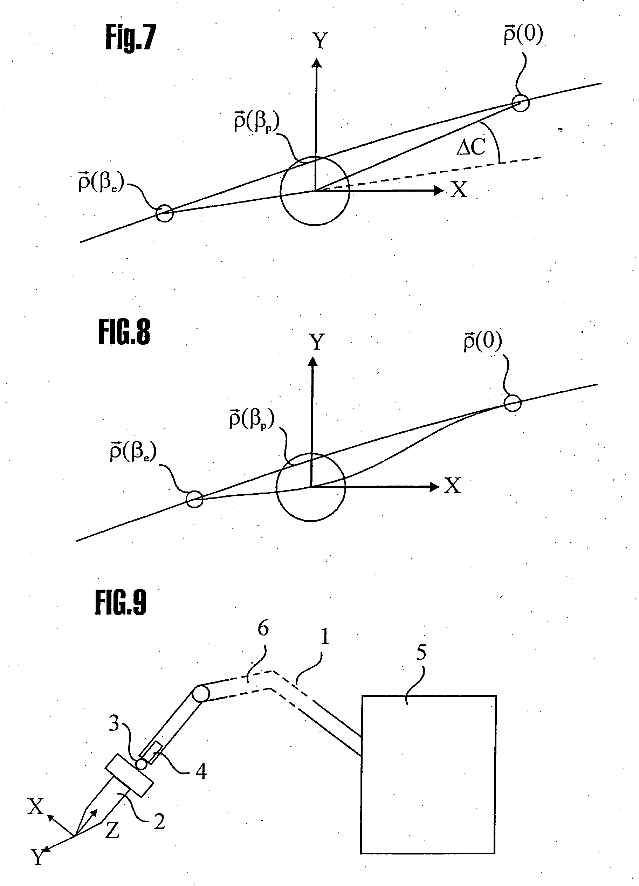

Wie in Figur 5 gezeigt bewirkt das Umleiten des Bewegungsstreckensatzes durch die Polstelle sprunghafte Richtungsänderungen am Start- und Endpunkt des Bewegungssatzes zum Vorgänger- bzw. Nachfolgersatz. Dies hat den Nachteil, dass die Bewegung an den Übergangsstellen auf Null abgebremst werden muss, um Geschwindigkeitssprünge der an der Bewegung beteiligten Achse der Werkzeugmaschine zu vermeiden.

Erfindungsgemäß ist nun vorgesehen, die Bewegung des Werkzeugs durch die Polstelle so zu führen, dass sie von dem Anfangspunkt zur Polstelle, d. h. zur Rotationsachse und von der Rotationsachse zu dem Endpunkt des ursprünglichen Bewegungsstreckensatzes führt. Dies wird durchgeführt, indem die Großkreisbewegung durch eine Vektorrotation um eine fest im Raum stehende Drehachse $\acute{u}_0$, siehe Figur 6, dargestellt wird.

$$\rho(\beta) = \rho_0 \cos \beta + (u'_0 \times \rho'_0)\sin \beta \in [0, \beta_e],$$

wobei $\beta_e$ der Winkel zwischen dem Start- und dem Endorientierungsvektor, $\vec{\rho}(\beta)$ die momentane Position des Orientierungsvektors und $\beta$ der momentane Winkel des Orientierungsvektors darstellt.

Um die Großkreisbewegung so umzuleiten, dass die Position des Werkzeuges gemäß der Projektion auf die XY-Ebene durch die Polstelle verläuft, wird die Drehachse $\vec{u}$ von $u'_0$ in Richtung der XY-Ebene bewegt. Die durch den Bewegungsstreckensatz vollzogene Bewegung führt durch die Polstelle, wenn sich der Vektor der Drehachse $\vec{u}$ auf der XY-Ebene befindet.

Während eines Bewegungsstreckensatzes, der nahe an einer Polstelle vorbeiführt, wird nun eine Pendelbewegung der Drehachse $\vec{u}$ so durchgeführt; dass der Orientierungsvektor von $\vec{\rho} = \rho_0$ durch den Pol $\vec{\rho} = \vec{e}_z$ zum Endpunkt $\vec{\rho} = \rho(\beta_e)$ bewegt wird. In der Darstellung der Figur 6 wird somit der Drehachsenvektor $\vec{u}$ von der Ausgangsstellung $u'_0$ auf die X-Koordinate $\vec{u} = e'_x$ und wieder zurück nach $u'_0$ bewegt. Dies wird durchgeführt, indem zunächst der Winkel $\beta_\rho$ bestimmt wird, bei dem der Orientierungsvektor den minimalen Abstand zur Polstelle hat. An dieser Stelle liegen $\rho(\beta_\rho)$, $e_z$ und $u'_0$ in einer Ebene. Anschließend wird die Bewegung des Drehachsenvektors $\vec{u}$ in Intervallen $[0, \beta_\rho]$ und $[\beta_\rho, \beta_e]$ berechnet. An der Stelle $\beta_\rho$ erreicht die Drehachse ihren Umkehrpunkt $u'_c$ der gegeben ist, durch

$$\vec{u}_c = \begin{pmatrix} u_{ox} \\ u_{0y} \\ 0 \end{pmatrix}.$$

Die Bewegung des Drehachsenvektors $\vec{u}(\beta)$ kann also für die Bewegung von dem Anfangspunkt zur Rotationsachse bzw. zur Polstelle gemäß einem ersten Teil-Streckensatz beschrieben werden, als:

$$\vec{u}(\beta) \doteq \vec{u}_0 + \left(\vec{u}_c - \vec{u}_0\right)\frac{\beta}{\beta_\rho}, \qquad \beta \in \lfloor 0, \beta_\rho \rfloor.$$

Entsprechend gilt für die Bewegung des Werkzeuges von der Polstelle zum Endpunkt der Bewegung gemäß dem zweiten Teil-Streckensatz:

$$\vec{u}(\beta) = \vec{u}_c + (\vec{u}_0 - \vec{u}_c) \frac{\beta - \beta_\rho}{\beta_e - \beta_\rho}, \qquad \beta \in \lfloor \beta_\rho, \beta_e \rfloor$$

Dies ergibt den in Figur 7 gezeigten Verlauf der Orientierungsbewegung.

Um die sprunghaften, unstetigen Übergänge zwischen den Teil-Streckensätzen und den jeweiligen Vorgänger- und Nachfolgerbewegungen zu eliminieren und um den nicht-tangentialen Übergang an der Polstelle, der eine C-Achs-Drehbewegung um den Betrag $\Delta_c$ bei konstanten $\vec{\rho} = \vec{e}_z$ erfordert, zu vermeiden, ist vorgesehen, für die Hin- und Rückbewegung gemäß dem ersten und zweiten Teil-Streckensätz ein Polynom vierten Grades für die Drehachse $\vec{u}$ vorzusehen.

Die Polynome werden durch Koeffizientenvektoren $c'_i$ und $d_i$ gemäß folgenden Gleichungen:

$$\vec{u}_1(\beta) = \sum_{i=0}^{4} \vec{c}_i \cdot \beta^i, \qquad \beta \in \lfloor 0, \beta_\rho \rfloor$$

$$\vec{u_2}(\beta) = \sum_{i=0}^{4} \vec{d_i}(\beta - \beta_\rho)^i \qquad \beta \in \lfloor \beta_\rho, \beta_e \rfloor$$

berechnet, indem folgende Randbedingungen berücksichtig werden:

$$\vec{u}_1(0) = \vec{u}_0$$

$$\vec{u}_1'(0) = \vec{u}_1''(0) = 0$$

$$\vec{u}_1(\beta_\rho) = \vec{u}_2(\beta_\rho) = \vec{u}_c$$

$$\vec{u}_1'(\beta_\rho) = \vec{u}_2'(\beta_\rho)$$

$$\vec{u}_1''(\beta_\rho) = \vec{u}_2''(\beta_\rho)$$

$$\vec{u}_2(\beta_e) = \vec{u}_0$$

$$\vec{u}_2'(\beta_e) = \vec{u}_2''(\beta_e) = 0 \;.$$

Die Randbedingungen legen fest, dass die Bewegung des ersten Teil-Streckensatzes gemäß dem Koeffizientenvektor $c_i$ (i = 0; ....; 4) am Startpunkt des ursprünglichen Bewegungsstreckensatzes beginnt und dort einen glatten Übergang zum Vorgängerbewegungsstreckensatz aufweist. Darüber hinaus wird gefordert, dass der Übergang zwischen dem ersten Teil-Streckensatz und dem zweiten Teil-Streckensatz an der Polstelle ebenfalls $c^2$-stetig vorliegt. Für den zweiten Teil-Streckensatz ist gemäß dem Koeffizientenvektor $d_i$ (i = 0; ...; 4) gefordert, dass ein glatter (stetiger) Übergang zum Nachfolgerbewegüngsstreckensatz gegeben ist.

Diese zehn vorgegebenen Randbedingungen ermöglichen es, die jeweils fünf unbekannten Elemente der Koeffizientenvektoren $c_i$ und $´d_i$ des Polynoms zu berechnen. Es ergibt sich:

$$\vec{c}_0 = \vec{u}_0$$

$$\vec{c}_1 = \vec{c}_2 = 0$$

$$\vec{c}_3 = 2\,\frac{w_0 + w_1}{w_0^3 w_1}\,(\vec{u}_c - \vec{u}_0)$$

$$\vec{c}_4 = -\frac{2w_0 + w_1}{w_0^4 w_1}\,(\vec{u}_c - \vec{u}_0)$$

$$\vec{d}_0 = \vec{u}_c$$

$$\vec{d}_1 = 2\,\frac{w_1 - w_0}{w_0 w_1}\,(\vec{u}_c - \vec{u}_0)$$

$$\vec{d}_2 = \frac{-6}{w_0 w_1} (\vec{u}_c - \vec{u}_0)$$

$$\vec{d}_3 = 2\frac{w_0 + 3w_1}{w_0 w_1^3} (\vec{u}_c - \vec{u}_0)$$

$$\vec{d}_4 = -\frac{w_0 + 2w_1}{w_0 w_1^4} (\vec{u}_c - \vec{u}_0)$$

wobei $w_0 = \beta_\rho$ und $w_1 = \beta_e - \beta_\rho$ sind. Die sich daraus ergebende Bewegung des Orientierungsvektors ist in Figur 8 dargestellt. Man erkennt die geglätteten Übergänge an dem Anfangs- und Endpunkt des Bewegungsstreckensatzes und an der Polstelle. Dies ermöglicht es, eine zu schnelle Drehbewegung der Rundachse zu vermeiden und gleichzeitig dafür zu sorgen, dass die modifizierte Orientierungsbewegung an keiner Stelle um mehr als $\varepsilon$ von der ursprünglichen Bewegung abweicht.

Selbstverständlich ist die Wahl der Funktion, mit der der Drehachsenvektor abhängig von dem Winkel $\beta$ verändert wird, beliebig wählbar, solange die vorgegebenen Bedingungen erfüllbar sind.

In Figur 9 ist schematisch eine Werkzeugmaschine 1 zur Steuerung der Orientierung eines Werkzeugs 2 dargestellt. Das Werkzeug weist eine Schwenkachse 3 und eine Rotationsachse 4 auf, um das Werkzeug in einer Ebene um die Rotationsachse zu rotieren. Die Werkzeugmaschine 1 weist weiterhin eine Steuereinheit 5 auf, die die Bewegung eines Roboterarms 6 an dem. das Werkzeug 2 angebracht ist, zu steuern. Die Steuereinheit 5 ist so gestaltet, um den Bewegungsstreckensatz zu einem modifizierten Bewegungsstreckensatz zu ändern, so dass die Bewegung gemäß dem modifizierten Bewegungsstreckensatzes durch die Rotationsachse führt, wenn die durch den Bewegungsstreckensatz definierte Bewegungsstrecke durch einen vorbestimmten Bereich um die Rotationsachse führt. Der modifizierte Streckensatz weist einen ersten Teilstreckensatz, der eine erste Bewegung von einem Anfangspunkt bis zur Rotationsachse beschreibt und einen zweiten Teilstreckensatz auf, der eine Bewegung von der Rotationsachse zu einem Endpunkt beschreibt. Der Anfangspunkt und der Endpunkt liegen auf der durch den Bewegungsstreckensatz definierten Bewegungsstrecke.

**Patentansprüche**

1. Verfahren zur Steuerung der Orientierung eines Werkzeugs an einer Werkzeugmaschine mit einer Rundachse, um das Werkzeug in einer Ebene um eine Rotationsachse zu rotieren,
   wobei die Werkzeugmaschine so gesteuert wird, um das Werkzeug gemäß eines Bewegungsstreckensätzes zu bewegen,
   wobei der Bewegungsstreckensatz zu einem modifizierten Bewegungsstreckensatz geändert wird, dass die Bewegung gemäß dem modifizierten Bewegungsstreckensatzes durch die Rotationsachse führt, wenn die durch den Bewegungsstreckensatz definierte Bewegungsstrecke durch einen vorbestimmten Bereich um die Rotationsachse führt, **dadurch gekennzeichnet, dass**
   der modifizierte Bewegungsstreckensatz einen ersten Teil-Streckensatz, der eine erste Bewegung von einem Anfangspunkt bis zur Rotationsachse beschreibt, und
   einen zweiten Teil-Streckensatz aufweist, der eine Bewegung von der Rotationsachse zu einem Endpunkt beschreibt, wobei der Anfangspunkt und der Endpunkt auf der durch den Bewegungsstreckensatz definierten Bewegungsstrecke liegen.

2. Verfahren nach Anspruch 1, **dadurch gekennzeichnet, dass** die durch den modifizierten Bewegungsstreckensatz beschriebene Bewegung gemäß einem Orientierungsvektor erfolgt,
   wobei der Anfangspunkt durch einen Startorientierungsvektor und der Endpunkt durch einen Endorientierungsvektor dargestellt ist,
   wobei die Rotation durch eine Kreisbewegung um einen Drehachsenvektor um einen Winkel (beta) zwischen dem Startorientierungsvektor und dem Endorientierungsvektor dargestellt wird,
   wobei die erste Bewegung bis zu einem Umkehrwinkel erfolgt und die zweite Bewegung von dem Umkehrwinkel ausgehend erfolgt,
   wobei der Umkehrwinkel durch den Winkel bestimmt wird, an dem der Orientierungsvektor den minimalen Abstand zur Rotationsachse hat,

wobei der Drehachsenvektor bei der ersten Bewegung gemäß dem ersten Teil-Streckensatz von einer Ausgangslage in Richtung der Ebene bewegt wird, und bei der zweiten Bewegung gemäß dem zweiten Teil-Streckensatz in Richtung der Ausgangslage zurückbewegt wird.

3. Verfahren nach Anspruch 2, **dadurch gekennzeichnet, dass** der Drehachsenvektor gemäß des ersten und/oder des zweiten Teil-Streckensatz linear bewegt wird.

4. Verfahren nach Anspruch 2, **dadurch gekennzeichnet, dass** der erste und/oder der zweite Teil-Streckensatz eine Bewegung beschreiben, die tangentiale und krümmungsstetige Übergänge zur Vorgänger und/oder Nachfolgerbewegung aufweisen.

5. Verfahren nach Anspruch 2 oder 4, **dadurch gekennzeichnet, dass** der erste und der zweiten Teil-Streckensatz so angepasst wird, dass an der Rotationsachse ebenfalls ein tangentialer und krümmungsstetiger Übergang zwischen den Bewegungen gebildet wird.

6. Verfahren nach Anspruch 2, 4 oder 5, **dadurch gekennzeichnet, dass** der erste und der zweiten Teil-Streckensatz jeweils mit-Hilfe eine Polynom-Funktion beschrieben wird.

7. Verfahren nach Anspruch 6, **dadurch gekennzeichnet, dass** die Polynomfunktion eine Polynomfunktion vierten Grades ist.

8. Werkzeugmaschine (1) zur Steuerung der Orientierung eines Werkzeugs (2) mit einer Rundachse (4), um das Werkzeug (2) in einer Ebene um eine Rotationsachse zu rotieren,
wobei die Werkzeugmaschine (1) eine Steuereinheit (5) aufweist, um das Werkzeug gemäß eines Bewegungsstreckensatzes in der Ebene um die Rotationsachse zu bewegen, wobei die Steuereinheit (5) weiterhin so gestaltet ist, um den Bewegungsstreckensatz zu einem modifizierten Bewegungsstreckensatz zu ändern, so dass die Bewegung gemäß dem modifizierten Bewegungsstreckehsatzes durch die Rotationsachse führt, wenn die durch den Bewegungsstreckensatz definierte Bewegungsstrecke durch einen vorbestimmten Bereich um die Rotationsachse führt,
wobei der modifizierte Streckensatz eine ersten Teil-Streckensatz, der eine erste Bewegung von einem Anfangspunkt bis zur Rotationsachse beschreibt, und einen zweiten Teil-Streckensatz aufweist, der eine Bewegung von der Rotationsachse zu einem Endpunkt beschreibt, wobei der Anfangspunkt und der Endpunkt auf der durch den Bewegungsstreckensatz definierten Bewegungsstrecke liegen.

**Fig.1**

**Fig.2**

$\Delta C_1/\Delta t$

$\Delta C_2/\Delta t$

**Fig.3**

ε-Umgebung

**FIG.4**

**FIG.5**

ε-Umgebung

**FIG.6**

$\vec{\rho}(\beta_e)$ $\vec{\rho}_0$

**Fig.7**

**FIG.8**

**FIG.9**